# EUROPEAN PATENT SPECIFICATION

(11) **EP 3 869 716 B1**
(45) Date of publication and mention of the grant of the patent: **28.06.2023**
(21) Application number: 20829169.0
(22) Date of filing: 27.08.2020
(51) Int. Cl.: H04L 65/80, H04L 1/16, H04L 1/18, H04L 65/611, H04L 65/612, H04L 69/164

(54) **NETWORK LOST PACKET RETRANSMISSION METHOD BASED ON TS FORMAT AND UDP TRANSMISSION MANNER**
VERFAHREN ZUR NEUÜBERTRAGUNG VON VERLORENEN NETZWERKPAKETEN AUF BASIS VON TS-FORMAT UND UDP-ÜBERTRAGUNGSART
PROCÉDÉ DE RETRANSMISSION D'UN PAQUET PERDU DANS UN RÉSEAU SUR LA BASE D'UN FORMAT TS ET D'UN MODE DE TRANSMISSION UDP

(30) Priority: 09.09.2019 CN 201910848653
(43) Date of publication of application: 25.08.2021
(73) Proprietor: Amlogic (Shenzhen), Ltd., Shenzhen, Guangdong 518000 (CN)
(72) Inventor: ZHOU, Maolin, Guangdong 518000 (CN)
(74) Representative: LLR
(86) International application number: PCT/CN2020/111639
(87) International publication number: WO 2021/047397

(56) References cited:
- EP-B1- 2 622 819
- CN-A- 101 656 747
- CN-A- 102 835 058
- CN-A- 103 685 243
- CN-A- 106 303 752
- CN-A- 110 730 053
- KR-A- 20180 027 281
- KR-A- 20190 046 510
- KR-A- 20190 081 048
- US-A1- 2007 237 185
- US-A1- 2010 157 788
- US-B1- 9 461 895

## Description

### TECHNICAL FIELD

The present invention relates to the field of user datagram protocol (UDP) transmission, and in particular to a method based on a TS format and a UDP transmission mode for retransmitting a lost network packet.

### BACKGROUND

In an Interprotocol television (IPTV) media system, many media packets are transmitted by means of UDP, which is a connectionless transmission mode and thus often causes loss of network packets. Loss of the network packets will disable a terminal from receiving complete media packets, resulting in playing lagging, a blurred screen and the like of an IPTV terminal, which has a great impact on users' watching of programs.

Application-layer based retransmission of lost network packets ensures, by requesting a media server for the lost media packets from a network, the completeness of the media packets received by the terminal, thereby ensuring normal media playback and improving user experience in case of poor network quality.

Currently, in the IPTV system, methods for retransmitting lost packets on an application layer are basically implemented based on the real-time transport protocol (RTP).

The terminal determines whether there is a packet loss according to the continuity of Seq of the received RTP. For example, if the terminal successively receives RTP media packets with Seq of 1, 3, 4, and 5, it can be determined that an RTP media packet with Seq of 2 is lost during network transmission. At this time, the terminal may send a request for retransmitting the RTP media packet with Seq of 2 to the media server. Upon receiving the RTP media packet with Seq of 2, retransmitted by the media server, the terminal completely receives the RTP media packets with Seq of 1, 2, 3, 4 and 5 sent by the media server.

However, in the actual IPTV system, media transmission is not exactly performed by means of RTP and is also performed by means of transport stream (TS) format based UDP, and thus an RTP retransmission mode is unavailable. The TS format has a continuity counter (CC) field similar to Seq of RTP, and the CC fields are normally continuous. Therefore, whether there is a packet loss may be determined by checking the continuity of the CC fields. However, since the CC field has only 4 bit lengths ranging from 0 to 15. This range of value is so narrow that TS-format media packets with the same CC field may quickly appear in the network packet easily, but actually they are different TS-format media packets. Thus, in addition to the CC field, some methods are also required for identifying a unique TS-format media packet to prevent a retransmission server from misjudging packet loss of the terminal. Now, it is necessary to find a method based on a TS format and a UDP transmission mode for retransmitting a lost packet to improve the user experience in case of poor network quality. KR 20190081048A discloses a method and apparatus for detecting and recovering packet loss during stream packet transmission using an IP network, the MLR server uses the A, B, C, and D values to determine the "recovery start position" and the "recovery end position" of the lost packet section, the A, B, C, and D values are extracted based on the last packet (recovery start position) in which a normal continuation counter CC is held, A is a program clock reference information (PCR) value, B is an index value, C is a start sample bitmask, and D is start sample packet specific information. KR 20190046510A discloses an apparatus and a method for improving packet loss recovery, where the request and retransmission technologies are applied and necessary packages are selectively recovered after sensing a packet loss based on a restoration request signal which includes PCR information received immediately before the last TS packet normally received before the lost TS packet, the index value assigned to the previous N (N≥1) packet based on the last TS packet, the header information of the (N + 1) TS packets including the last TS packet and the immediately preceding N packets, and the header information of the (N + 1) TS packets received after the lost TS packet. US 2010157788A1 discloses a system, and the system determines a packet loss location of the at least one packet from a network topology tree based on the loss signature. EP 2622819B1 discloses a method for determining the number (k) of lost IP packets according to the CC field values.

### SUMMARY

To solve the above problems, the present invention provides a method based on a TS format and a UDP transmission mode for retransmitting a lost network packet.

The present invention is implemented by the following technical solutions.

The present invention provides a method based on a TS format and a UDP transmission mode for retransmitting a lost network packet. The method includes the following steps:
S1: receiving, by a media terminal (101), TS-format media packets sent by a media server (102) by means of UDP;
S2: checking the continuity of CC fields of the TS-format media packets every time the media terminal (101) receives a batch of TS-format media packets, and proceeding to the next step if the CC fields are discontinuous, which means that packet loss has occurred to the TS-format media packets sent by the media server (102) by means of UDP;
S3: sending, by the media terminal (101), a retransmission request packet to a media retransmission server (103) by means of UDP, and analyzing the retransmission request packet by the media retransmission server (103) to obtain a TS-format media packet that is missing from the media terminal (101),
   wherein the retransmission request packet includes: part or all of content of the TS-format media packets received by the media terminal (101), and each of the CC fields of the TS-format media packets received by the media terminal (101); and wherein the media retransmission server (103) determines, based on the content and the CC fields in the retransmission request packet, the TS-format media packet that is missing from the media terminal (101); and
S4: packing, by the media retransmission server (103), the TS-format media packet that is missing from the media terminal (101) into a retransmission response packet by means of UDP and sending, by the media retransmission server (103), the retransmission response packet to the media terminal (101).

Further, in step S2, the media terminal (101) checks the continuity of the CC fields of the TS-format media packets, and if the CC fields are continuous, it means that there is no packet loss in the TS-format media packets sent by the media server (102) by means of UDP, and there is no need to proceed to the next step.

Further, the media server (102) and the media retransmission server (103) are deployed in the same server or different servers.

The present invention has the following beneficial effects.

The method based on the TS format and the UDP transmission mode for retransmitting the lost network packet according to the present invention enables the media retransmission server to accurately determine the TS-format media packet that is missing from the media terminal based on the retransmission request packet, thereby solving the problem of network packet loss based on the TS format and the UDP transmission mode.

### BRIEF DESCRIPTION OF THE DRAWINGS

FIG. 1 is a schematic diagram showing connection of a method based on a TS format and a UDP transmission mode for retransmitting a lost network packet according to the present invention;
FIG. 2 is a schematic diagram showing connection in the case where a media server and a media retransmission server are deployed on different servers according to the present invention; and
FIG. 3 is a schematic diagram showing connection in the case where a media server and a media retransmission server are deployed in the same server according to the present invention.

### DETAILED DESCRIPTION

In order to explain the technical solutions of the present invention more clearly and completely, the present invention is further described below with reference to the accompanying drawings.

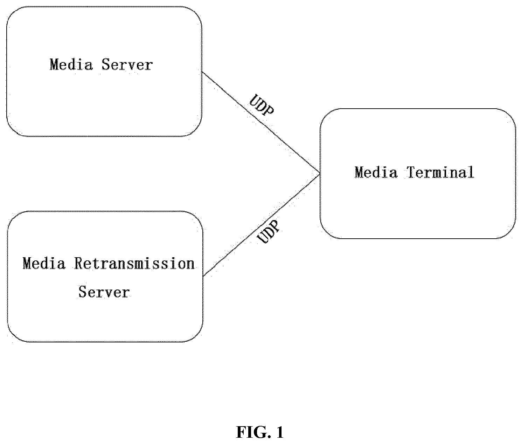

Referring to FIG. 1, the present invention provides a method based on a TS format and a UDP transmission mode for retransmitting a lost network packet. The method includes the following steps:
S1: receiving, by a media terminal, TS-format media packets sent by a media server by means of UDP;
S2: checking the continuity of CC fields of the TS-format media packets every time the media terminal receives a batch of TS-format media packets, and proceeding to the next step if the CC fields are discontinuous, which means that packet loss has occurred to the TS-format media packets sent by the media server by means of UDP;
S3: sending, by the media terminal, a retransmission request packet to a media retransmission server by means of UDP, and analyzing the retransmission request packet by the media retransmission server to obtain a TS-format media packet that is missing from the media terminal; and
S4: packing, by the media retransmission server, the TS-format media packet that is missing from the media terminal into a retransmission response packet by means of UDP and sending, by the media retransmission server, the retransmission response packet to the media terminal.

The retransmission request packet includes part or all of content of the TS-format media packets received by the media terminal, and the media retransmission server determines, based on the content and the CC fields of the TS-format media packets, the TS-format media packet that is missing from the media terminal.

In step S2, the media terminal checks the continuity of the CC fields of the TS-format media packets, and if the CC fields are continuous, it means that there is no packet loss in the TS-format media packets sent by the media server by means of UDP, and there is no need to proceed to the next step.

In this embodiment, the retransmission request packet includes part or all of the content of the TS-format media packets received by the media terminal, and it certainly includes the CC fields of the TS-format media packets. The media retransmission server determines, based on the content and the CC fields of the TS-format media packets, the TS-format media packet that is missing from the media terminal. Since the CC field has only 4 bit lengths ranging from 0 to 15, when the value of the CC field exceeds 15, it will turn to be 0 again. For example, when the retransmission request packet shows that the CC fields of the TS-format media packets received by the media terminal are 15, 0, 1, 2, 3, 6 and 9, the media retransmission server may determine, based on the content and the CC fields of the retransmission request packets, that TS-format media packets with the CC fields of 4, 5, 7, and 8 in this batch are missing from the media terminal. Finally, the media retransmission server packs the TS-format media packets with the CC fields of 4, 5, 7, and 8 into a retransmission response packet and sends the retransmission response packet to the media terminal. The method based on the TS format and the UDP transmission mode for retransmitting the lost network packet enables the media retransmission server to accurately determine the TS-format media packet that is missing from the media terminal based on the retransmission request packet, thereby solving the problem of network packet loss based on the TS format and the UDP transmission mode.

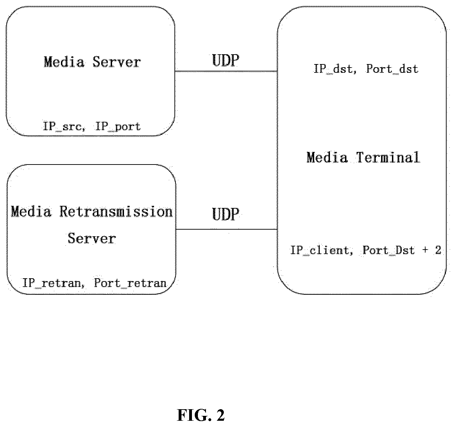

Referring to FIG. 2, the media server and the media retransmission server are deployed on different servers.

In this embodiment, an address and a port of the media server are IP_src and IP_port respectively. An address and a port of the media terminal for receiving the media server are IP_dst and Port_dst respectively; and an address and a port of the media terminal for sending the retransmission request packet are IP_client and Port_Dst+2 respectively. An address and a port of the media retransmission server are IP_retran and Port_retran respectively. The media terminal communicates with the media server by the address IP_dst and the port Port_dst, and communicates with the media retransmission server by the address IP_client and the port Port_Dst+2. The retransmission request packet sent by the media terminal to the media retransmission server includes: ("REQU", Seq, IP_dst, Port_dst, IP_client, Port_Dst+2, TS Packet N-2, TS Packet N-1, and TS Packet N+7), in which
the "REQU" field represents one retransmission request packet;
Seq is the number of times that the media terminal sends the retransmission request packet to the media retransmission server; and
TS Packet N-2, TS Packet N-1, and TS Packet N+7 are part or all of the content of the TS-format media packets received by the media terminal.

Upon receiving the retransmission request packet, the media retransmission server may conclude, based on the content and the CC fields of the retransmission request packet, that the TS-format media packets with the CC fields of N, N+1, N+2, N+3, N+4, N+5 and N+6 in this batch are missing from the media terminal, then packs the TS-format media packets with the CC fields of N, N+1, N+2, N+3, N+4, N+5 and N+6 into the retransmission response packet and sends the retransmission response packet to the media terminal. The retransmission response packet includes ("RESP", ACK Seq, Retran Total PacketNums, Current Retran PacketNum, TS Packet N, TS Packet N+1, TS Packet N+2, TS Packet N+3, TS Packet N+4, TS Packet N+5, and TS Packet N+6), in which
the "RESP" field represents one retransmission response packet;
ACK Seq is a response packet to Seq, and the value of ACK Seq is equal to the value of Seq;
Retran Total PacketNums represents that in response to this retransmission request, the packet needs to be divided into several retransmission response packets to be completely transmitted to the media terminal;
Current Retran PacketNum represents the serial number of Retran Total PacketNums; and
TS Packet N, TS Packet N+1, TS Packet N+2, TS Packet N+3, TS Packet N+4, TS Packet N+5, and TS Packet N+6 are complete TS-format media packets.

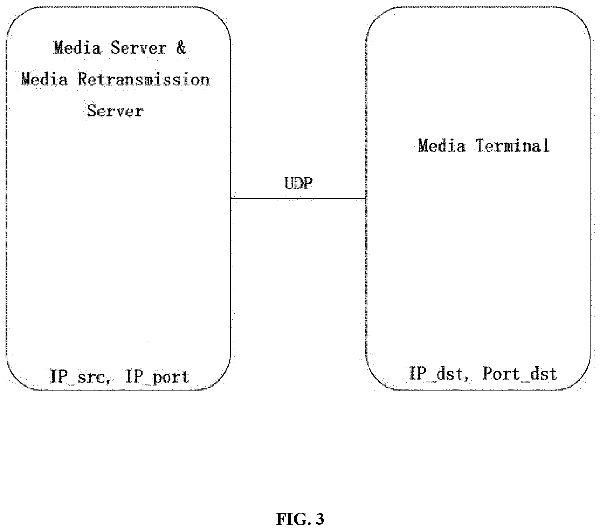

Referring to FIG. 3, the media server and the media retransmission server are deployed in the same server.

In this embodiment, the address and the port of the media server are IP_src and IP_port respectively. At this time, the media retransmission server and the media server share the address and the port. The address and the port of the media terminal are IP_dst and Port_dst respectively. The media terminal communicates with the media server and the media retransmission server by the address IP_dst and the port Port_dst.

## Claims

1. A method based on a TS format and a UDP transmission mode for retransmitting a lost network packet, comprising the following steps:
S1: receiving, by a media terminal (101), TS-format media packets sent by a media server (102) by means of UDP;
S2: checking the continuity of CC fields of the TS-format media packets every time the media terminal (101) receives a batch of TS-format media packets, and proceeding to the next step if the CC fields are discontinuous, which means that packet loss has occurred to the TS-format media packets sent by the media server (102) by means of UDP;
S3: sending, by the media terminal (101), a retransmission request packet to a media retransmission server (103) by means of UDP, and analyzing the retransmission request packet by the media retransmission server (103) to obtain a TS-format media packet that is missing from the media terminal (101),
**characterized in that**:
wherein the retransmission request packet comprises: part or all of content of the TS-format media packets received by the media terminal (101), and each of the CC fields of the TS-format media packets received by the media terminal (101); and
wherein the media retransmission server (103) determines, based on the content and the CC fields in the retransmission request packet, the TS-format media packet that is missing from the media terminal (101); and
S4: packing, by the media retransmission server, the TS-format media packet that is missing from the media terminal (101) into a retransmission response packet by means of UDP and sending, by the media retransmission server, the retransmission response packet to the media terminal (101).

2. The method based on the TS format and the UDP transmission mode for retransmitting the lost network packet according to claim 1, wherein in step S2, the media terminal (101) checks the continuity of the CC fields of the TS-format media packets, and if the CC fields are continuous, it means that there is no packet loss in the TS-format media packets sent by the media server (102) by means of UDP, and there is no need to proceed to the next step.

3. The method based on the TS format and the UDP transmission mode for retransmitting the lost network packet according to claim 1, wherein the media server (102) and the media retransmission server (103) are deployed in the same server or different servers.

## Patentansprüche

1. Verfahren zur Neuübertragung eines verlorenen Netzwerkpakets, basierend auf einem TS-Format und einem UDP-Übertragungsmodus, die folgenden Schritte umfassend:
S1: Empfang von von einem Medienserver (102) mittels UDP gesendeten Medienpaketen im TS-Format durch ein Medienendgerät (101);
S2: Prüfen des ununterbrochenen Fortlaufens der CC-Felder der Medienpakete im TS-Format ein jedes Mal, wenn das Medienendgerät (101) einen Stapel von Medienpaketen im TS-Format empfängt, und Fortfahren mit dem nächsten Schritt, wenn die CC-Felder nicht ununterbrochen fortlaufend sind, was bedeutet, dass bei den von dem Medienserver (102) mittels UDP gesendeten Medienpaketen im TS-Format ein Paketverlust aufgetreten ist;
S3: Senden eines Neuübertragungsanforderungspakets an einen Medienneuübertragungsserver (103) durch das Medienendgerät (101) mittels UDP und Analysieren des Neuübertragungsanforderungspakets durch den Medienneuübertragungsserver (103), um ein Medienpaket im TS-Format zu erhalten, das bei dem Medienendgerät (101) fehlt,
**dadurch gekennzeichnet, dass**:
das Neuübertragungsanforderungspaket einen Teil des Inhalts oder den gesamten Inhalt der von dem Medienendgerät (101) empfangenen Medienpakete im TS-Format und jedes der CC-Felder der von dem Medienendgerät (101) empfangenen Medienpakete im TS-Format umfasst; und
der Medienneuübertragungsserver (103) basierend auf dem Inhalt und den CC-Feldern in dem Neuübertragungsanforderungspaket das Medienpaket im TS-Format ermittelt, das bei dem Medienendgerät (101) fehlt; und
S4: Verpacken des bei dem Medienendgerät (101) fehlenden Medienpakets im TS-Format durch den Medienneuübertragungsserver in ein Neuübertragungsantwortpaket mittels UDP und Senden des Neuübertragungsantwortpakets durch den Medienneuübertragungsserver an das Medienendgerät (101).

2. Verfahren zur Neuübertragung des verlorenen Netzwerkpakets, basierend auf dem TS-Format und dem UDP-Übertragungsmodus nach Anspruch 1, wobei in Schritt S2 das Medienendgerät (101) das ununterbrochene Fortlaufen der CC-Felder der Medienpakete im TS-Format prüft, und wenn die CC-Felder ununterbrochen fortlaufend sind, dies bedeutet, dass es bei den von dem Medienserver (102) mittels UDP gesendeten Medienpaketen im TS-Format keinen Paketverlust gibt und nicht mit dem nächsten Schritt fortgefahren werden muss.

3. Verfahren zur Neuübertragung des verlorenen Netzwerkpakets, basierend auf dem TS-Format und dem UDP-Übertragungsmodus nach Anspruch 1, wobei der Medienserver (102) und der Medienneuübertragungsserver (103) auf demselben Server oder auf verschiedenen Servern eingesetzt werden.

## Revendications

1. Un procédé basé sur un format TS et un mode de transmission UDP pour retransmettre un paquet réseau perdu, comprenant les étapes suivantes :
S1 : réception, par un terminal multimédia (101), de paquets multimédia au format TS émis par un serveur multimédia (102) au moyen d'UDP ;
S2 : vérification de la continuité des champs CC des paquets multimédia au format TS chaque fois que le terminal multimédia (101) reçoit un lot de paquets multimédia au format TS, et passage à l'étape suivante si les champs CC sont discontinus, ce qui signifie qu'une perte de paquet s'est produite sur les paquets multimédia au format TS envoyés par le serveur multimédia (102) au moyen d'UDP ;
S3 : envoi, par le terminal multimédia (101), d'un paquet de demande de retransmission à un serveur (103) de retransmission de multimédia au moyen d'UDP, et analyse du paquet de demande de retransmission par le serveur (103) de retransmission de multimédia pour obtenir un paquet multimédia au format TS qui est manquant du terminal multimédia (101),
**caractérisé en ce que** :
le paquet de demande de retransmission comprend : une partie ou la totalité du contenu des paquets multimédia au format TS reçus par le terminal multimédia (101), et chacun des champs CC des paquets multimédia au format TS reçus par le terminal multimédia (101) ; et
le serveur (103) de retransmission de multimédia détermine, sur la base du contenu et des champs CC dans le paquet de demande de retransmission, le paquet multimédia au format TS qui est manquant au terminal multimédia (101) ; et
S4 : empaquetage, par le serveur de retransmission de multimédia, du paquet multimédia au format TS qui est manquant au terminal multimédia (101) dans un paquet de réponse de retransmission au moyen d'UDP et envoi, par le serveur de retransmission de multimédia, du paquet de réponse de retransmission au terminal multimédia (101).

2. Le procédé basé sur le format TS et le mode de transmission UDP pour retransmettre le paquet réseau perdu selon la revendication 1, **caractérisé en ce qu'**à l'étape S2, le terminal multimédia (101) vérifie la continuité des champs CC des paquets multimédia au format TS., et si les champs CC sont continus, cela signifie qu'il n'y a pas de perte de paquet dans les paquets multimédia au format TS envoyés par le serveur multimédia (102) au moyen d'UDP, et qu'il n'est pas nécessaire de passer à l'étape suivante.

3. Le procédé basé sur le format TS et le mode de transmission UDP pour retransmettre le paquet réseau perdu selon la revendication 1, dans lequel le serveur multimédia (102) et le serveur de retransmission multimédia (103) sont déployés dans le même serveur ou des serveurs différents.
